Europäisches Patentamt

European Patent Office

Office européen des brevets

(19)

(11) Publication number: **0 163 481 B1**

(12) **EUROPEAN PATENT SPECIFICATION**

(45) Date of publication of patent specification: 27.03.91　(51) Int. Cl.⁵: **G11B 20/10**

(21) Application number: **85303606.9**

(22) Date of filing: **22.05.85**

(54) Disc drive control apparatus for recording and/or reproducing digital data.

(30) Priority: **31.05.84 JP 111709/84**

(43) Date of publication of application:
**04.12.85 Bulletin 85/49**

(45) Publication of the grant of the patent:
**27.03.91 Bulletin 91/13**

(84) Designated Contracting States:
**AT CH DE FR GB IT LI NL SE**

(56) References cited:
**EP-A- 0 088 982**
**DE-A- 2 639 895**
**US-A- 4 494 157**

**PATENT ABSTRACTS OF JAPAN, vol. 8, no.
89 (P-270)[1526], 24th April 1984; & JP - A - 59
005 374 (TOKYO DENKI K.K.) 12-01-1984**

(73) Proprietor: **SONY CORPORATION
7-35 Kitashinagawa 6-Chome Shinagawa-ku
Tokyo 141(JP)**

(72) Inventor: **Kutaragi, Ken c/o Patent Division
Sony Corporation 7-35 Kitashinagawa-6
Shinagawa-ku Tokyo(JP)**

(74) Representative: **Thomas, Christopher Hugo et
al
D Young & Co 10 Staple Inn
London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to disc drive control apparatus for recording and/or reproducing digital data, and to corresponding methods. Embodiments of the invention are particularly, but not exclusively, suitable for use in systems wherein a flexible disc cartridge (floppy disc) is used to store digital data for a computer.

A prior art 8 inch (approximately 20.3 cm) or 5.25 inch (approximately 13.3 cm) floppy disc is standardized in its format and almost all disc drives are operated using the standardized format. As a result, it is very difficult to employ advanced technology for realising higher density recording and/or reproducing in the prior art systems. Moreover, since the rotational speed of a magnetic disc incorporated in the prior art floppy disc system is usually 300 r.p.m. or 600 r.p.m., it is impossible to record and/or reproduce an analogue video signal in real time. If the video signal is digitised, it can be recorded and/or reproduced, but one floppy disc is capable of at best recording only one still video frame of information. Furthermore, in addition to an analogue-to-digital (A/D) converter and an digital-to-analogue (D/A) converter, a frame memory is required, so that a complete system becomes very expensive and large in size.

Accordingly, it is not practical to use the prior art floppy disc system to record and/or reproduce a video signal.

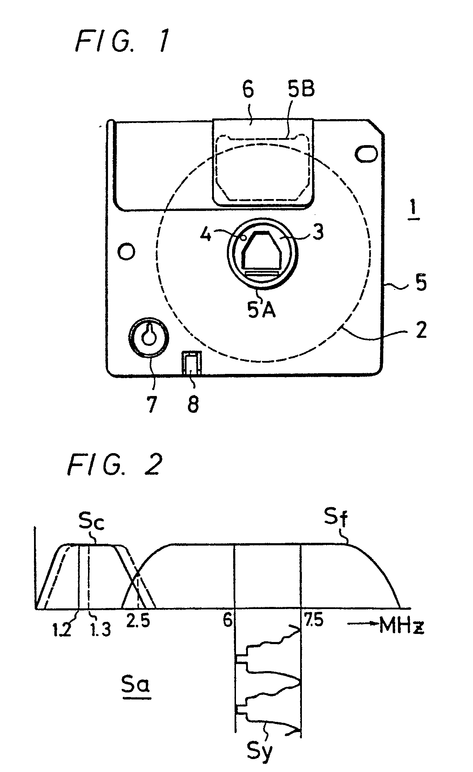

An electronic still camera conference in Japan therefore proposed a 2 inch (approximately 5.1 cm) floppy disc as a recording medium for an electronic still camera. Figure 1 of the accompanying drawings is a diagram of such a 2 inch floppy disc 1, illustrating the general construction thereof. The floppy disc 1 incorporates a magnetic disc 2 which is 47 mm in diameter and 40 μm in thickness, and is provided at its centre portion with a centre core 3 with which the spindle of a drive mechanism can be engaged. The centre core 3 is also provided with a magnetic member 4 for determining the rotational position of the magnetic disc 2.

The magnetic disc 2 is enclosed in a jacket 5 which is 60 x 54 x 3.6 mm in size, and within which the magnetic disc 2 is freely rotatable. The jacket 5 includes a central opening 5A in which the centre core 3 and the magnetic member 4 are exposed to the outside. The jacket 5 is further provided with another opening 5B through which a magnetic head (not shown) can be brought into contact with the magnetic disc 2 for recording and/or reproduction. When the floppy disc 1 is not in use, the opening 5B is closed by a slidable dust-proof shutter 6. A counter dial 7 indicates the number of pictures taken by a camera, and a tab 8 is provided to prevent accidental mis-recording. Removal of the tab 8 inhibits recording.

Fifty magnetic tracks can be concentrically recorded on one surface of the magnetic disc 2, the outermost track being represented as the first track and the innermost track being represented as the fiftieth track. The width of each track is 60 μm and the guard band width between tracks is 40 μm.

In taking a picture, the magnetic disc 2 is rotated at 3600 r.p.m. (the field frequency) and a colour video signal of one field is recorded on each track of the magnetic disc 2. The colour video signal to be recorded is as shown in Figure 2 of the accompanying drawings and comprises a luminance signal Sy frequency-modulated to form a frequency modulated signal Sf, wherein the sync tip level is 6 MHz and the white peak level is 7.5 MHz. Regarding a chrominance signal, there is formed a line sequential colour signal Sc which consists of a frequency modulated signal, the centre frequency of which is 1.2 MHz, modulated by a red colour difference signal and a frequency modulated signal, the centre frequency of which is 1.3 MHz, modulated by a blue colour difference signal. A signal Sa obtained by adding the frequency modulated colour signal Sc and the frequency modulated luminance signal Sy is recorded on the magnetic disc 2.

Thus, as described above, the floppy disc 1 as shown in Figure 1 has a size, function and characteristic suiting it for use as a recording medium for fifty still colour video signals.

Since, however, the floppy disc 1 is standardized so as to record and/or reproduce analogue colour video signals, it cannot easily handle digital data. If, for example, digital data are converted to a quasi-video signal and is then recorded on the floppy disc 1, just as in an audio pulse code modulation processor for a video tape recorder, problems arise because the floppy disc 1 has a small memory capacity for the original digital data, and also because there are many problems such as a data compatibility with an existing 8 inch or 5.25 inch floppy disc.

Alternatively, it might be considered that when the colour video signal is recorded on or reproduced from the floppy disc 1, the above-described format could be used, while when the digital data are recorded on or reproduced therefrom, the prior art floppy disc format could be used. However, in this case, when the floppy disc 1 is used for the video signal, it has a very high recording density, while when it is used for the digital data, it has a low recording density, so the floppy disc 1 is not being utilised efficiently.

When both a video signal and digital data are to be recorded on or reproduced from one floppy disc 1, then because the two signals differ substantially in the bands occupied and in their other characteristics, it is difficult to record and reproduce both the video signal and the digital data under optimum conditions because of differing requirements for such things as electromagnetic transducer characteristics and the head-disc contact condition. Moreover, when both a video signal and digital data are to be recorded and/or reproduced, the drive unit for rotating the floppy disc 1 must be rotated at 300 or 600 r.p.m. in case of the digital data and 3600 r.p.m. in the case of the video signal. Also, when the rotational speed of the floppy disc 1 is changed, the floppy disc 1 cannot be accessed for several seconds until the servo has stabilized.

It might, therefore, be considered that the floppy disc 1 could use the following format so as also to be able to record and reproduce the digital data satisfactorily.

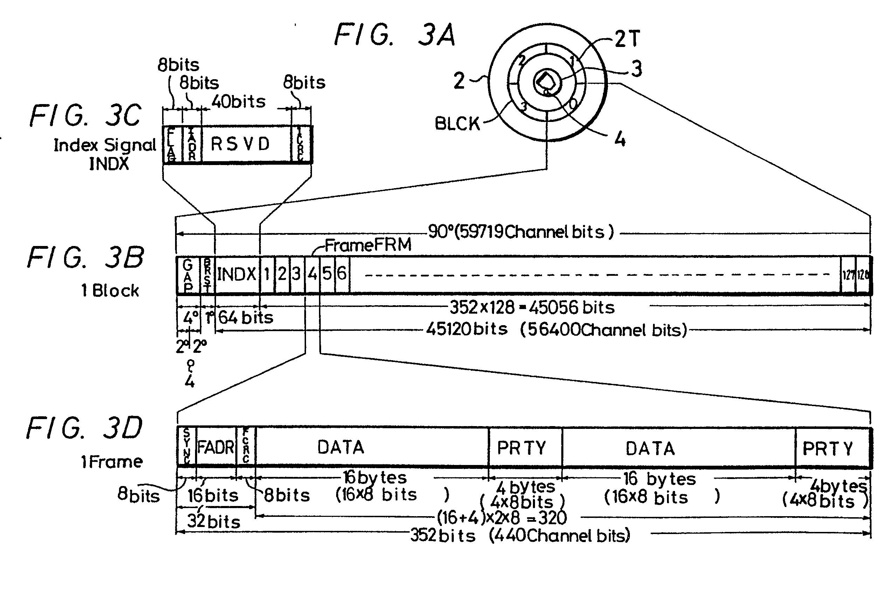

Figure 3A of the accompanying drawings show one track 2T on the magnetic disc 2. The track 2T is equally divided into four 90° intervals in its circumferential direction with the magnetic member 4 as a reference. Each of the four intervals is called a block BLCK, and the block BLCK of the interval containing the magnetic member 4 is designated as block 0 and the succeeding three block are designated block 1, block 2 and block 3, sequentially.

As shown in Figure 3B of the accompanying drawings, in each block BLCK, an interval of 4° from its beginning is represented as a gap interval GAP which provides a margin upon reading and writing. A succeeding interval of 1° is represented as a burst interval BRST. In this case, in the block 0 BLCK, the centre of the gap interval GAP corresponds to the position of the magnetic member 4. The burst interval BRST is an interval in which there is recorded and/or reproduced a burst signal BRST which serves as:

   1) a preamble signal
   2) a signal indicative of the recording density of a recorded signal, and
   3) a flag signal indicating that the recorded signal is a digital signal.

The burst interval BRST is followed by an interval for an index signal INDX. In this case, as shown in Figure 3C of the accompanying drawings, the index signal INDX consists of a flag signal FLAG of 8 bits, an address signal IADR of 8 bits, a reserved signal RSVD of 40 bits and a check signal ICRC of 8 bits. The flag signal FLAG is to indicate, for example, whether the track 2T to which the block BLCK belongs is bad or not, or whether the track 2T is erased or not. The address signal IADR is to indicate the number (1 to 50) of the track 2T and the number (0 to 3) of the block BLCK, and the check signal ICRC is a cyclic redundancy check code (CRCC) for the flag signal FLAG, the address signal IADR and the reserved signal RSVD.

An interval which follows the index interval INDX is equally divided into 128 intervals, and a signal called a frame FRM is recorded in or reproduced from each of these intervals.

That is, as shown in Figure 3D of the accompanying drawings, one frame FRM includes from its beginning sequentially a frame synchronising signal SYNC of 8 bits, a frame address signal FADR of 16 bits, a check signal FCRC of 8 bits, data DATA of 16 bytes (one byte = 8 bits), redundant or parity data PRTY of 4 bytes, other digital data DATA of 16 bytes, and other redundant or parity data PRTY of 4 bytes. In this case, the check signal FCRC is a CRCC for the frame address signal FADR. The data DATA are a CRCC for the frame address signal FADR. The data DATA are the original data which should be accessed by a host computer or apparatus, and these data DATA are interleaved within a period of digital data of one block BLCK. The redundant data PRTY are parity data $C_1$ and $C_2$ which are generated by a Reed Solomon coding method having a minimum distance of five for digital data of one block (32 bytes x 128 frames).

Accordingly, the capacities for digital data of one block BLCK, one track 2T and one disc 1 are as follows:

   one block: 4096 bytes (= 32 bytes x 128 frames)
   one track: 16 K bytes (= 4096 bytes x 4 blocks)
   one disc: 800 K bytes (= 16 K bytes x 50 tracks)
   The numbers of bits in one frame FRM and one block BLCK are as follows:
   one frame: 352 bits (8 + 16 + 8 bits + (16 + 4) x 8 x 2 bits)
   one block (only the index interval and the frame interval): 45120 bits (352 x 128 bits + 64 bits)

In practice, however, when the digital signal is recorded on or reproduced from the disc 1, a digital sum value (DSV) is required to be small and the minimum length between transitions (Tmin) divided by the maximum length between transitions (Tmax) is required to be small, while a window margin (Tw) is required to be large. Thus, all of the afore-described digital signals are subjected to 8/10 (eight-to-ten)-conversion with Tmax = 4T and are then recorded on the disc 1. Upon reproducing, they are subjected to a reverse conversion and then subjected to the succeeding inherent signal processing.

Accordingly, in the case of the above-described data density, the actual number of bits on the disc 1 is multiplied by 10/8, so:

   one frame: 440 channel bits
   one block (only the index interval and the frame interval): 56400 channel bits

Thus, the number of bits in the whole interval of one block corresponds to 59719 channel bits (that is approximately 56400 channel bits x 90°/85°). Since, in practice, the length of each interval is assigned by the number of the channel bits as mentioned above, the total angle of the frame intervals is a little shorter than 85°.

Consequently, the bit rate at which the disc 1 is accessed by the digital signal (signal after converted by 8/10-conversion) is:

14.32 M bits/sec (that is approximately 59719 bits x 4 blocks x the field frequency) and one bit corresponds to 69.8 nanoseconds.

As described above, with the format as shown in Figure 3, 800 K bytes of digital data can be written on or read from the floppy disc 1 of 2 inch size, and this capacity is more than twice the capacity (320 K bytes) of the prior art 5.25 inch floppy disc. Thus, this 2 inch floppy disc 1 has a large capacity in spite of its small size.

Since the disc 2 is rotated at the same rotational speed as in the case of a colour video signal recording, when the colour video signal and the digital data are recorded on or reproduced from the disc 2 which mixed, both the signals to be recorded on or reproduced from the disc 2 have a similar frequency spectrum, so that they can be recorded on or reproduced from the disc 2 under the optimum conditions of, for example, the electromagnetic conversion characteristic and the contact condition with a magnetic head. Moreover, even when the two signals are recorded on or reproduced from the disc 2 while mixed, since the rotational speed of the disc 2 is not changed, it is not necessary to provide additional time to change over the servo circuit, and thus the two signals are both immediately available. In addition, since the rotational speed of the disc 2 has only a single value, and only a single mechanism for an electromagnetic transducer system is required, the cost is relatively low.

Thus, even although the floppy disc 1 of Figure 1 is intended for an analogue signal as mentioned above, if the format of Figure 3 is used, the floppy disc 1 can achieve a new effect corresponding to a floppy disc of the next generation.

In the case of the prior art floppy disc, data transfer between it and peripheral devices is carried out directly at a speed determined by the rotational speed of the floppy disc without using a buffer memory therebetween. Moreover, data are allocated on the floppy disc such that data are written in or read out from the floppy disc in sector units with consecutive address data. In other words, the time sequence of the data recorded on the floppy disc is continous relative to the original time sequence.

However, in the above-mentioned next generation floppy disc, a higher transfer speed is required as the digital magnetic recording becomes higher in density. Furthermore, since the data have a redundant bit added for error correction, and the data are re-arranged by interleaving, the time sequence of the resultant data becomes non-consecutive relative to the original time sequence on the floppy disc. As a result, the floppy disc cannot be connected directly with the peripheral devices.

Therefore, it might be considered that a buffer memory should be interposed between the floppy disc and the peripheral devices. If, however, the data having the data allocation corresponding to the recorded pattern on the floppy disc are written in or read out from the buffer memory as they are, the logical data address as seen from the peripheral devices is not continuous. Accordingly, when the data are transferred in a direct memory acces (DMA) manner, so as to transfer the data at high speed, since the data must be transferred with their addresses consecutive, the addresses do not match with the buffer memory, and hence the data cannot be transferred at high speed.

European patent specification EP-A1-O 088 982 discloses apparatus similar to the pre-characterizing part of claims 1 and 2.

According to the present invention there is provided a disc drive control apparatus for recording and/or reproducing digital data along a record track of a magnetic disc, the apparatus comprising: circuit means for reading and/or writing the digital data from and/or on the magnetic disc via a magnetic transducer, said circuit means comprising buffer storage means for storing said digital data and a direct memory access controller for transferring said digital data between said buffer storage means and a peripheral device; characterized in that: said digital data include at least actual data and error check data to be arranged alternately along said record track and to be stored in separate areas of said buffer storage means; and by error correction encoding means for generating said error check data based on the actual data transferred from the peripheral device to said buffer store means; error correcting decoding means for error correcting said actual data read from said track of the magnetic disc on the basis of said error check data; and address converting means for assigning the addresses of the buffer storage means non-consecutively as viewed from the recorded pattern of said track on the disc but consecutively as seen from the peripheral device.

According to the present invention there is also provided a method of recording and/or reproducing digital data on a rotary magnetic disc under the condition that address data of the digital data are made non-consecutive relative to an original time sequence thereof by adding error correction bits to the digital data and by re-arrangement of the digital data;

a buffer memory being provided between said rotary magnetic disc and a peripheral device, characterized by:

said buffer memory having a capacity capable of completing the rearrangement of the digital data;

allocating the digital data to said buffer memory such that actual data and the error correction bits are respectively stored in different memory areas of said buffer memory; and

converting address data upon writing or reading the digital data from said buffer memory so as to allocate the address data such that the address data become non-consecutive as seen from a recorded pattern of the magnetic disc and consecutive as seen from said peripheral device.

The invention will now be described by way of example with reference to the accompanying drawings, throughout which like parts are referred to by like references, and in which:

Figure 1 is a diagram of a prior art floppy disc, illustrating the overall construction thereof;

Figure 2 is a waveform diagram showing an example of a colour signal recorded on the floppy disc of Figure 1;

Figures 3A to 3D are diagrams for explaining a format of a floppy disc;

Figure 4 is a block diagram of an embodiment of the present invention; and

Figure 5 is a diagram for explaining part of the embodiment.

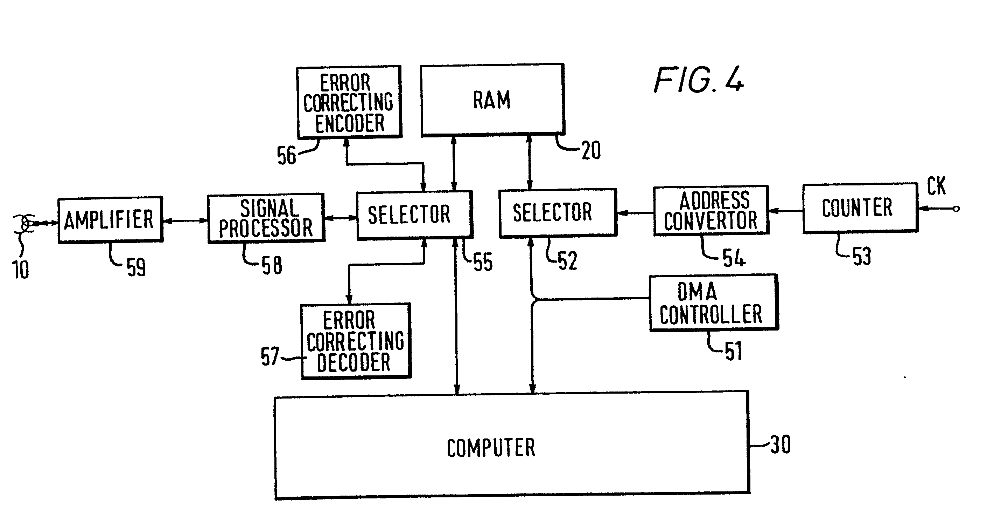

In the embodiment of Figure 4 digital data are recorded on and/or reproduced from the aforesaid next generation floppy disc.

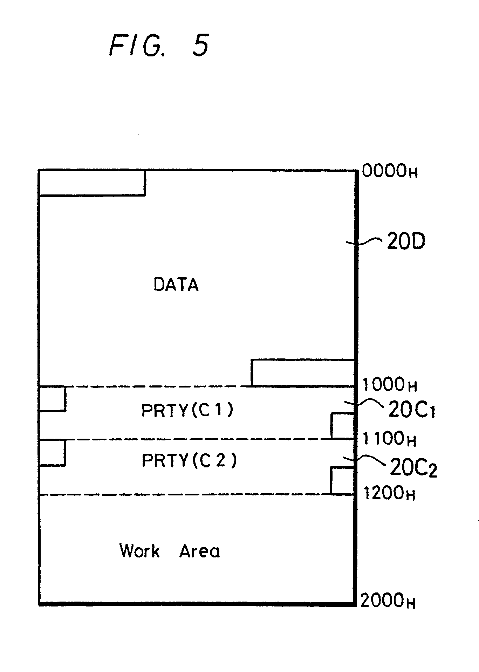

Referring to Figure 4, a magnetic head 10 is shown to write data on the rotary magnetic disc 2 (Figure 1) and to read them therefrom, while a random access memory (RAM) 20 serves as a buffer memory. A host computer 30 is shown as a peripheral device. As earlier noted, since the data are interleaved within one block BLCK and a redundant bit is added, the RAM 20 used has a sufficient capacity to store the data of at least one block BLCK. Moreover, as shown in Figure 5, memory addresses are assigned so as to store actual data DATA and the parity data $C_1$ and $C_2$ in respective different areas of the buffer memory.

A DMA controller 51 is provided which produces consecutive address data. These consecutive address data are supplied to the address bus of the host computer 30, and are supplied to the address terminal ADRS of the RAM 20 through a selector 52.

A counter 53 counts a clock CK supplied thereto and produces consecutive address data. The consecutive address data from this counter 53 are supplied to and converted by an address data converter circuit 54 so as to correspond to the interleaved address data. The converted address data are supplied through the selector 52 to the address terminal ADRS of the RAM 20.

A selector 55 is provided which selectively supplies the data DATA to each portion of the system.

An error correcting encoder 56 is provided which forms the parity data $C_1$ and $C_2$ from the data DATA upon recording, and an error correcting decoder 57 is provided which carries out error correction by using the parity data $C_1$ and $C_2$ upon reproducing.

A signal processing circuit 58 carries out the conversion of serial data to parallel data, eight-to-ten (8/10) conversion, and the reverse conversions. A recording and playback amplifier 59 is also provided.

The operation of the above-described system will now be described.

Firstly, the recording mode will be described.

The actual data of one block supplied over the data bus from the host computer 30 are supplied through the selector 55 to the RAM 20. At that time, the consecutive address data from the DMA controller 51 are supplied through the selector 52 to the RAM 20. Thus, in the RAM 20 there are stored the actual data with their original time sequence unchanged and in consecutive state at the consecutive addresses thereof in a data memory area 20D shown in Figure 5. When all of the actual data of one block are stored in the RAM 20, the error correcting encoder 56 forms the parity data $C_2$ from these data, and these parity data $C_2$ are stored in a memory area $20C_2$ of the RAM 20 while being made consecutive.

In accordance with the converted address data from the address converter circuit 54, the actual data and the parity data $C_2$ are read out from the RAM 20 in the corresponding supply order of the recorded pattern on the disc, the parity data $C_1$ are added in the error correcting encoder 56, and the resulting data are then fed to the signal processing circuit 58. In the signal processing circuit 58, the 8/10 conversion is carried out and the parallel data are converted to serial data, which then are fed through the recording and playback amplifier 59 to the magnetic head 10, by which the data are recorded on the track 2T of the magnetic disc 2 in a portion corresponding to an interval of 90°, for example, the block 0.

After the reading of one block data from the RAM 20 has ended, in response to a write request signal the actual data of the succeeding one block are supplied from the host computer 30 to the RAM 20, and then the actual data of one block to which has been added the parity data $C_1$ and $C_2$, are interleaved in exactly the same manner as the above-mentioned operation, and are then recorded on the track 2T of the magnetic disc 2 at the portion corresponding to a succeeding interval of 90°, for example, the block 1. Similarly, after the recording of the data of four blocks has ended, the data are recorded on another track.

While in this embodiment, upon recording, of the memory area of the RAM 20, an area $20C_1$ for the parity data $C_1$ is not used, it is possible that after the generated parity data $C_1$ has been stored once in this area $20C_1$, the data DATA and the parity data $C_1$ and $C_2$ may be read out from the RAM 20 in the order of the recorded patterns.

In the playback mode, when the magnetic head 10 traces the track 2T, data are extracted from the outputs of the magnetic head 10 at every one block corresponding to the interval of 90°, and are then processed in the following manner.

The extracted data are supplied through the amplifier 59 to the signal processing circuit 58 in which they are converted from 10-bit data to 8-bit data and the serial data are reconverted to 8-bit parallel data. The parallel data are supplied through the selector 55 to the RAM 20, and stored in the RAM 20 such that the data DATA and the parity data $C_1$ and $C_2$ are respectively stored in memory areas 20D, $20C_1$ and $20C_2$ in accordance with the address data corresponding to the interleave upon recording. In other words, the data are stored in the RAM 20 such that the data series dispersed by the address data from the address data converting circuit 54 becomes the consecutive data series.

When all the data of one block are written in the RAM 20, in accordance with the address data from the address converting circuit 54, the data DATA of the RAM 20 are error corrected using the parity data $C_1$ and $C_2$ by the error correcting decoder 57 and then once again written in the RAM 20. Finally, therefore, the error-corrected data DATA are stored in the RAM 20.

Thus, when the data DATA are all stored in the RAM 20 in the sequential order of the original time sequence with the addresses consecutive, a signal READY is returned to the DMA controller 51, the data bus is cut off from a central processing unit of the host computer 30 and the data DATA stored in the RAM 20 are transferred in DMA manner to the peripheral device in accordance with the control of the DMA controller 51.

When the signal READY is returned to the host computer 30, the I/O transfer to the host computer 30 becomes of course possible.

Thus, not only is the buffer memory provided between the magnetic disc and the peripheral device but also when the data are written in the buffer memory or read out therefrom, the address conversion is carried such that the address is allocated so as to be non-consecutive as seen from the disc but consecutive as seen from the peripheral device. Accordingly, it is not necessary to carry out address conversion after the error correction and the addition of the parity data, so the time required for such conversion can be shortened and the field memory can be reduced. Moreover, since the address can be processed as the consecutive address by the peripheral device, this system can be matched with a system in which consecutive address data, such as a DMA transfer request, is generated from the outside.

## Claims

1. Disc drive control apparatus for recording and/or reproducing digital data along a record track (2T) of a magnetic disc (2), the apparatus comprising:

   circuit means for reading and/or writing the digital data from and/or on the magnetic disc (2) via a magnetic transducer (10), said circuit means comprising buffer storage means (20) for storing said digital data and a direct memory access controller (51) for transferring said digital data between said buffer storage means (20) and a peripheral device (30);

   characterized in that:

   said digital data include at least actual data (DATA) and error check data (PRTY) to be arranged alternately along said record track (2T) and to be stored in separate areas ($20C_1$, $20C_2$) of said buffer storage means (20); and by

   error correction encoding means (56) for generating said error check data (PRTY) based on the actual data (DATA) transferred from the peripheral device (30) to said buffer store means (20);

   error correcting decoding means (57) for error correcting said actual data (DATA) read from said track (2T) of the magnetic disc (2) on the basis of said error check data (PRTY); and

   address converting means (53, 54) for assigning the addresses of the buffer storage means (20) non-consecutively as viewed from the recorded pattern of said track (2T) on the disc (2) but consecutively as seen from the peripheral device (30).

2. A method of recording and/or reproducing digital data on a rotary magnetic disc (2) under the condition that address data of the digital data are made non-consecutive relative to an original time sequence thereof by adding error correction bits to the digital data and by re-arrangement of the digital data;

a buffer memory (20) being provided between said rotary magnetic disc (2) and a peripheral device (30);

characterized by:

said buffer memory (20) having a capacity capable of completing the rearrangement of the digital data;

allocating the digital data to said buffer memory (20) such that actual data and the error correction bits are respectively stored in different memory areas of said buffer memory (20); and

converting address data upon writing or reading the digital data from said buffer memory (20) so as to allocate the address data such that the address data become non-consecutive as seen from a recorded pattern of the magnetic disc (2) and consecutive as seen from said peripheral device (30).

**Revendications**

1.  Dispositif de commande d'unité de disques pour l'enregistrement et/ou la reproduction de données numériques le long d'une piste d'enregistrement (2T) d'un disque magnétique (2), le dispositif comprenant:

un moyen à circuit pour lire et/ou écrire les données numériques sur le disque magnétique (2) par l'intermédiaire d'un transducteur magnétique (10), le moyen à circuit comprenant un moyen à mémoire tampon (20) pour mémoriser les données numériques et un contrôleur d'accès direct à la mémoire (51) pour transférer les données numériques entre le moyen à mémoire tampon (20) et un dispositif périphérique (30);

caractérisé en ce que:

les données numériques comprennent au moins des données effectives (DATA) et des données de contrôle de parité (PRTY) à disposer alternativement le long de la piste d'enregistrement (2T) et à mémoriser dans des zones séparées (20C₁, 20C₂) du moyen à mémoire tampon (20); et par

un moyen de codage de correction d'erreurs (56) pour générer les données de contrôle d'erreurs (PRTY) selon les données effectives (DATA) transférées du dispositif périphérique (30) au moyen à mémoire tampon (20);

un moyen de décodage de correction d'erreurs (57) pour corriger les erreurs des données effectives (DATA) lues sur la piste (2T) du disque magnétique (2) en fonction des données de contrôle d'erreurs (PRTY); et

un moyen de conversion d'adresse (53, 54) pour affecter les adresses du moyen à mémoire tampon (20) non consécutivement telles que vues de la configuration enregistrée de la piste (2T) sur le disque (2) mais consécutivement telles que vues du dispositif périphérique (30).

2.  Procédé d'enregistrement et/ou de reproduction de données numériques sur un disque magnétique tournant (2) dans les conditions où les données d'adresse des données numériques sont rendues non consécutives par rapport à leur séquence temporelle initiale en ajoutant des bits de correction d'erreurs aux données numériques et en redisposant les données numériques;

une mémoire tampon (20) étant prévue entre le disque magnétique tournant (2) et un dispositif périphérique (30);

caractérisé par:

la mémoire tampon (20) ayant une capacité permettant de terminer la redisposition des données numériques;

une opération consistant à affecter les données numériques à la mémoire tampon (20) de telle sorte que les données effectives et les bits de correction d'erreurs sont respectivement mémorisés dans différentes zones de mémoire de la mémoire tampon (20); et par

une opération consistant à convertir les données d'adresse lors d'une écriture ou d'une lecture des données numériques provenant de la mémoire tampon (20) de manière à affecter les données d'adresse de telle sorte que les données d'adresse deviennent non consécutives telles que vues d'une configuration enregistrée du disque magnétique (2) et consécutives telles que vues du dispositif périphérique (30).

**Ansprüche**

1.  Steuervorrichtung für ein Plattenlaufwerk zur Aufnahme und/oder Wiedergabe von digitalen Daten auf einer bzw. von einer Aufzeichnungsspur (2T) einer Magnetplatte (2),

mit einer Schaltungsanordnung zum Auslesen und/oder Einschreiben der digitalen Daten von der/auf die Magnetplatte (2) mittels eines magnetischen Wandlers (10), wobei diese Schaltungsanordnung eine Pufferspeichereinrichtung (20) zum Speichern der digitalen Daten und eine Steuerung (21) für direkten Speicher-Zugriff zur Übertragung der digitalen Daten zwischen der Pufferspeichereinrichtung (20) und einer peripheren Einheit (30) aufweist,

dadurch gekennzeichnet,

daß die digitalen Daten zumindest Nutz-Daten (DATA) und Fehlerprüfdaten (PRTY) enthalten, die abwechselnd auf der Aufzeichnungsspur anzuordnen und in separaten Bereichen (20C$_1$, 20C$_2$) der Pufferspeichereinrichtung (20) zu speichern sind,

ferner gekennzeichnet durch

eine Fehlerkorrektur-Kodiereinrichtung (56) zur Erzeugung der Fehlerprüfdaten (PRTY) auf der Grundlage der von der peripheren Einheit (30) zu der Pufferspeichereinrichtung (20) übertragenen Nutz-Daten (DATA),

eine Fehlerkorrektur-Dekodiereinrichtung (57) zur Fehlerkorrektur der von der genannten Spur der Magnetplatte (2) ausgelesenen Nutz-Daten (DATA) auf der Grundlage der Fehlerprüfdaten (PRTY) und

eine Adressen-Umsetz-Einrichtung (53, 54) zur Zuteilung der Adressen der Pufferspeichereinrichtung (20) derart, daß sie, von dem aufgezeichneten Muster der Spur (2T) der Platte aus betrachtet, eine nicht aufeinanderfolgende Ordnung, hingegen, von der peripheren Einheit (30) aus betrachtet, eine aufeinanderfolgende Ordnung haben.

2. Verfahren zur Aufzeichnung und/oder zur Wiedergabe von digitalen Daten auf bzw. von einer rotierenden Magnetplatte (2) un ter der Bedingung, daß Adressen-Daten der digitalen Daten relativ zu einer ursprünglichen Zeitfolge derselben durch Hinzufügen von Fehlerkorrektur-Bits zu den digitalen Daten und durch Neuanordnung der digitalen Daten in eine nicht aufeinanderfolgende Ordnung gebracht wurden,

wobei zwischen der rotierenden Magnetplatte (2) und einer peripheren Einheit (30) ein Pufferspeicher (20) vorgesehen ist,

dadurch gekennzeichnet,

daß der Pufferspeicher (20) eine Kapazität hat, die die Neuordnung der digitalen Daten ermöglicht,

daß die digitalen Daten in der Weise dem Pufferspeicher (20) zugeteilt werden, daß Nutz-Daten und die Fehlerkorrektur-Bits jeweils in unterschiedlichen Speicherbereichen des Pufferspeichers (20) gespeichert werden,

und daß die Adressen-Daten beim Einschreiben oder Auslesen der digitalen Daten in den bzw. aus dem Pufferspeicher (20) so umgesetzt werden, daß die Adressen-Daten in der Weise zugeteilt werden, daß sie, von einem Aufzeichnungsmuster der Magnetplatte (2) aus betrachtet, eine nicht aufeinanderfolgende Ordnung, und, von der peripheren Einheit (30) aus betrachtet, eine aufeinanderfolgende Ordnung einnehmen.

FIG. 1

FIG. 2

FIG. 3A

2T
3
4
2
BLCK

FIG. 3C
Index Signal
INDX

8bits
8bits
40bits
8bits

F A S
F A D R
R S V D

FIG. 3B
1 Block

Frame FRM
90°(59719 Channel bits)

G A P
B R S T
INDX 1 2 3 4 5 6 127 128

352 × 128 = 45056 bits
45120 bits (56400 Channel bits)

4° 2°
2⁴

64 bits

FIG. 3D
1 Frame

S Y N
F A D R
C R C
DATA
PRTY
DATA
PRTY

8bits
16bits
16 bytes
(16×8 bits)
4 bytes
(4×8bits)
16 bytes
(16×8 bits)
4 bytes
(4×8 bits)

32 bits
(16+4)×2×8 = 320
352 bits (440 Channel bits)

# FIG. 4

FIG. 5

| | |
|---|---|
| DATA | 0000H |
| | ⌒20D |
| | 1000H |
| PRTY(C 1) | ⌒20C₁ |
| | 1100H |
| PRTY(C 2) | ⌒20C₂ |
| | 1200H |
| Work Area | |
| | 2000H |